Europäisches Patentamt

European Patent Office

Office européen des brevets

(11) Veröffentlichungsnummer: **0 205 903**
**A1**

(12) **EUROPÄISCHE PATENTANMELDUNG**

(21) Anmeldenummer: 86106687.6

(22) Anmeldetag: 16.05.86

(51) Int. Cl.⁴: **C09C 1/50**

(30) Priorität: 23.05.85 CH 2196/85

(43) Veröffentlichungstag der Anmeldung:
30.12.86 Patentblatt 86/52

(84) Benannte Vertragsstaaten:
AT BE CH DE FR GB IT LI LU NL SE

(71) Anmelder: **BERA ANSTALT**
**Aeulenstrasse 38**
**FL-9490 Vaduz(LI)**

(72) Erfinder: **Der Erfinder hat auf seine Nennung**
**verzichtet**

(74) Vertreter: **Rottmann, Richard, Dipl.-Ing.**
**Rottmann Patentanwälte AG Dufourstrasse**
**101**
**CH-8008 Zürich(CH)**

(54) **Anlage zur Russherstellung.**

(57) Der hohle Reaktordeckel (1) ist mit einer feuerfesten Masse (16) ausgestampft, in welche eine Kühlschlange (13) eingebettet ist. Diese weist Zweigleitungen (14) auf, die um die Speiseeinheiten (6) und
der Vorbrenner (7) geführt sind. Die Speiseeinheiten
(6) sind um den zentral in den Reaktordeckel (1)
angeordneten Vorbrenner (7) gleichmässig verteilt
angeordnet. In dieser Weise wird im Reaktorraum
eine vorbestimmte Temperatur eingehalten, wodurch
die Qualität des jeweils erzeugten Produktes vorteilhaft beeinflusst wird.

EP 0 205 903 A1

FIG. 1

## Anlage zur Russherstellung

Die vorliegende Erfindung bezieht sich auf eine Anlage zur Russherstellung mit einem Reaktor, in dessen Deckel Speiseeinheiten für die dosierte Zufuhr von Luft und Kohlenwasserstoffen angeordnet sind, wobei jede Speiseeinheit einen Homogenisierraum zum Vermischen, Vergasen und Verteilen der Komponenten besitzt.

Solche Russerzeugungsanlagen sind bereits in vielen Ausführungsformen bekannt, welche sich hauptsächlich auf die Anordnung der Brenndüsen für die Erzeugung der Brenngase und der Düsen für die Einführung der für Russerzeugung vorgesehenen Kohlenwasserstoffe beziehen. Schwierigkeiten bietet eine Russerzeugungsanlage vorzusehen, mit welcher unterschiedliche Russqualitäten in grösserem Umfang hergestellt werden können. Zur Erzeugung unterschiedlicher Russqualitäten sind nämlich verschiedene Betriebsbedingungen zu berücksichtigen. Insbesondere ist ein bestimmtes Verhältnis Kohlenwasserstoff/Luft einzuhalten, wobei mit der Herstellung von Russqualitäten höherer Feinheit die thermische Belastung des Reaktors sehr ansteigt. Diese thermische Belastung herabzusetzen ist ein Hauptzweck der vorliegenden Erfindung. Insbesondere sollte eine thermische Ueberbeanspruchung und das Auftreten von Spannungen im Reaktordeckel vermieden werden. Aus diesem Grunde ist es wichtig, dass im Reaktordeckel ähnliche Verhältnisse herrschen wie im Reaktor selbst. In bekannter Weise hat man bis jetzt nur Massnahmen zur Kühlung der den Reaktor verlassenden Abgase angewendet und den Schutz des Reaktordeckels ausser acht gelassen.

Es wird erfindungsgemäss eine Verbesserung der bekannten Anlagen angestrebt und zu diesem Zwecke vorgeschlagen, in einer Anlage eingangs beschriebener Art den als Hohlgebilde geformten Deckel mit einer feuerfesten Masse auszustampfen, in welcher Kühlorgane Aufnahme finden. Auf diese Weise sollte die thermische Belastung im Bereiche des Reaktordeckels wesentlich herabgesetzt und an die Belastung des Reaktors angepasst werden.

Die Stampfmasse schützt die metallischen Teile des Reaktordeckels und durch die Kühlung der Masse wird die Haltbarkeit derselben bedeutend erhöht. Insbesondere wird verhütet, dass im Reaktordeckel Spannungen auftreten und Teile beschädigt werden.

Gleichzeitig werden die Reaktionsprodukte gerade in der Reaktionszone gekühlt, wodurch die thermische Belastung weiter herabgesetzt wird.

Bei allen gängigen Verfahren, die mit sehr hohen Temperaturen von über 1300°C arbeiten, beschränken sich die Kühlmassnahmen ausschliesslich auf die aussenseitige Kühlung des Blechmantels des Reaktors. Insbesondere wurden an der Aussenwandung des Reaktors Wärmeaustauscher angeordnet, während die Kühlung des Reaktordeckels nicht als notwendig erachtet wurde. Die Temperaturbelastung des Reaktordeckels wurde als gering eingeschätzt, wodurch der Nachteil entstand, dass bei hohen Reaktionstemperaturen kein Wärmeschutz für den Reaktordeckel vorhanden war. Dies wird gemäss der Erfindung erfolgreich verhindert, da zum Schutze des Reaktordeckels eine Stampfmasse vorhanden ist, welche gekühlt wird, so dass im Reaktordeckel die thermischen Verhältnisse ähnlich sind wie im Reaktor. Es entstehen deshalb keine Wärmespannungen im Deckel und die Stampfmasse wird folglich nicht abbröckeln.

In der flachen Unterseite des Reaktordeckels ist eine an einen Kühlmittelkreislauf angeschlossene Kühlschlange angeordnet. Diese weist um die Speiseeinheiten geführte Zweigleitungen auf. Auf diese Weise wird eine gute Kühlung erreicht, so dass die thermische Belastung des Reaktors erhöht werden kann, und Russqualitäten mit grösserer innerer Oberfläche hergestellt werden können.

Eine Besonderheit der vorgeschlagenen Anlage besteht noch darin, dass die vom Kühlmittel umflossenen Speiseeinheiten um einen im runden Reaktordeckel zentral angeordneten Vorbrenner in der Umfangsrichtung gleichmässig verteilt sind. Der Reaktordeckel weist dabei eine durch die Stampfmasse gebildete flache Unterseite auf, in welche die Kühlschlange eingebettet ist, welche Kühlschlange dann auch um den Vorbrenner geführt wird.

Die Anordnung von drei gleichmässig verteilten Speiseeinheiten in entsprechenden Homogenisierräumen ist besonders vorteilhaft. Die dabei auftretenden Wärmeprobleme können mit der angeordneten Kühlung leicht beherrscht werden, so dass eine Ueberhitzung des Reaktordeckels zuverlässig verhindert wird.

Weitere Merkmale de Erfindung gehen aus den übrigen Ansprüchen, aus der nachfolgenden Beschreibung, sowie aus den Zeichnungen hervor, welche ein Ausführungsbeispiel einer erfindungsgemässen Anlage zeigen. Es soll ausdrücklich darauf hingewiesen werden, dass sämtliche der nachstehend erwähnten oder dargestellten Merkmale sowohl für sich als auch in Verbindung mit anderen Merkmalen in beliebiger Kombination zum Gegenstand der Erfindung gehören. Es zeigen:

Fig. 1 einen Vertikalschnitt durch einen Reaktordeckel;

und

Fig. 2 eine Ansicht von unten gesehen.

Die Anlage zur Russherstellung weist als wesentlichen Teil einen Reaktor auf, welcher eingangsseitig durch einen Reaktordeckel 1 verschlossen ist. Dieser bildet die obere Begrenzung des nicht dargestellten vertikal verlaufenden Reaktorgehäuses, welches gemäss dem Ausführungsbeispiel im Querschnitt kreisförmig ist und in welchem die Russerzeugung aus Kohlenwasserstoffen und Luft erfolgt. Die genannten Bestandteile werden dosiert dem Deckel zugeführt, innig gemischt, teils vergast und im Reaktorraum partiell verbrannt. Die dabei entstehenden Rauchgase und der entstehende Russ werden anschliessend gekühlt, in einem Filteraggregat gefiltert und der Russ abgetrennt.

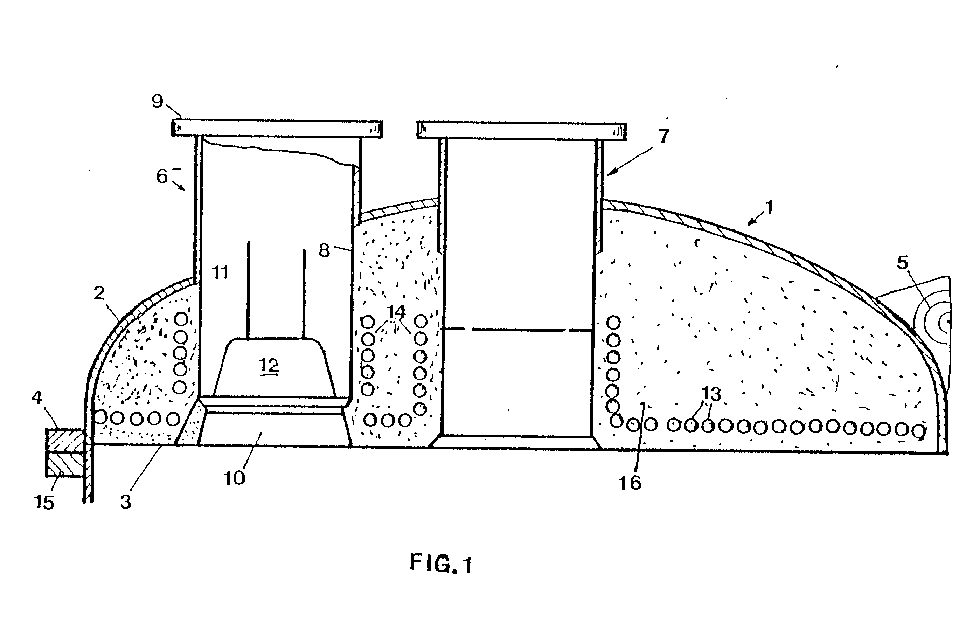

Wie aus der Fig. 1 hervorgeht, ist der Reaktordeckel 1 als Hohlgebilde geformt und weist einen domförmigen Oberteil 2 auf, welcher mit einer Stampfmasse 11 gefüllt ist. Die flache Unterseite ist mit 3 bezeichnet. Der Reaktordeckel 1 ist ferner mit einem Rundflansch 4 ausgerüstet, welcher dann mit einem entsprechenden Flansch 15 des Reaktorkörpers verschraubt wird. Es ist auch möglich, den Reaktordeckel schwenkbar am Reaktorkörper anzuordnen, wozu eine geeignete Gelenkverbindung 5 dient.

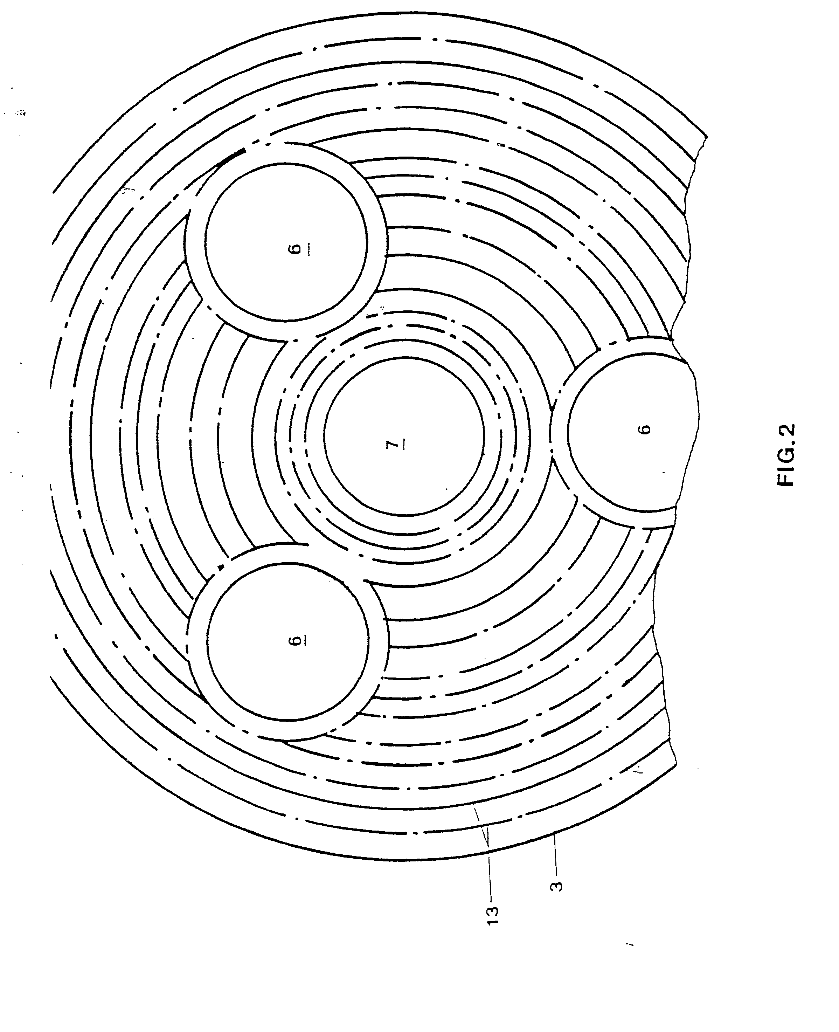

Zur dosierten Zufuhr von Luft und von Kohlenwasserstoffen sind im Deckel 1 eine Anzahl Speiseeinheiten 6 vorhanden, die in der Umfangsrichtung des domförmigen Deckelkörpers gleichmässig verteilt sind. Eine einfache und zweckmässige Ausführung ist durch die Verwendung von drei Speiseeinheiten 6 gegeben, welche einander gegenüber um 120° verdreht sind. Dies geht insbesondere aus der Fig. 2 hervor. Zentral in der Mitte ist ein Vorbrenner 7 angeordnet.

Jede Speiseeinheit weist ein rohrförmiges Gehäuse 8 auf, welches in eine entsprechende in axialer Richtung verlaufende Ausnehmung des domförmigen Oberteils 2 vertikal eingesetzt wird und in eine entsprechende im Boden 3 vorhandene Oeffnung 10 mündet.

Der untere Teil des rohrförmigen Gehäuses 8 ist ebenfalls mit Stampfmasse 11 gefüllt, so dass in jedem Gehäuse 8 eine Homogenisierkammer 12 offen bleibt. Das obere, der Oeffnung 10 abgekehrte Ende des rohrförmigen Gehäuses 8 ist mit einem Anschlussflansch 9 versehen. Der Anschlussflansch 9 dient zum Anschliessen eines rohrförmigen in der Zeichnung nicht näher dargestellten Halteorganes, welches zentral eine sich nach unten bis zur Homogenisierkammer 12 erstreckende Oellanze trägt und seitlich mit einem Anschluss zur dosierten Zufuhr von Luft versehen ist.

Zur Kühlung der Stampfmasse 11 im Bereiche der Reaktoreintrittsseite, d.h. im Bereiche der flachen Unterseite 3 der Stampfmasse 11, sowie zur Kühlung der Homogenisierkammern 12 sind im Reaktordeckel 1 Kühlorgane angeordnet. Diese Kühlorgane weisen eine Kühlschlange 13 auf, welche im Bereiche der flachen Unterseite 3 in die Stampfmasse 11 eingebettet ist und z.B., aus einer Rohrspirale gebildet sein kann. Die Kühlschlange 13 bedeckt die ganze Unterseite 3 mit Ausnahme der Ausnehmungen 10, wo die Speiseeinheiten 6 bzw. der Vorbrenner 7 münden. Zur Kühlung der letztgennannten Teile sind rohrförmige Spiralen 14 vorhanden, welche um den unteren sich innerhalb des Reaktordeckels befindlichen Teil der rohrförmigen Gehäuse 8 gewickelt sind. Die Kühlschlange 13 und die rohrförmigen Spiralen 14 können dem gleichen Kreislauf angehören, wobei die Zu-und Ableitung des zirkulierenden Kühlmediums in der Zeichnung nicht näher dargestellt ist.

Bei der beschriebenen Anlage zur Russherstellung kann eine Ueberhitzung im Bereiche des Reaktordeckels und an der Eintrittsseite des Reaktors nicht auftreten. Demzufolge werden auch Spannungen in der Masse 11 und im Oberteil 2 des Deckels 1 vermieden.

Im Betrieb wird zur Herstellung von Russ ein Kohlenwasserstoff, z.B. Schweröl, in dosierten Mengen durch die nicht dargestellten Oellanzen in die Homogenisierkammer 12 der Speiseeinheiten 6 gebracht, wobei gleichzeitig Luft als Sauerstoffträger ebenfalls in die Homogenisierkammer 12 geleitet wird. In der Homogenisierkammer wird der Sauerstoffträger mit dem eingespritzten Schweröl gemischt, worauf die Mischung kontinuierlich gezündet wird. Zum Ingangsetzen der Verbrennung dient der Vorbrenner 7 mit Gasbetrieb. Es erfolgt eine stark exotherme Reaktion, wobei die bei der Reaktion frei werdende Wärme, soweit sie nicht zur Umwandlung von Kohlenwasserstoff in Russ verbraucht wird durch die beschriebene Kühleinrichtung so weit abgeführt wird, dass keine Ueberhitzung auftreten kann. Auf diese Weise kann eine vorbestimmte Temperatur im Reaktionsraum eingehalten werden, wodurch die Qualität des jeweils erzeugten Produktes vorteilhaft beeinflusst wird.

Die Ausführung der Erfindung soll nicht ausschliesslich auf die Verwendung von drei gleichmässig verteilt angeordneten Speiseeinheiten beschränkt werden, obwohl die durchgeführten Versuche und die theoretischen Ermittlungen ergeben haben, dass mit drei Speiseeinheiten sehr gute Resultate zu erzielen sind und zwar sowohl was die Russqualitäten betrifft als auch bezüglich der Beherrschung der auftretenden Hitzeprobleme. Darüberhinaus hat sich gezeigt, dass beim Auftreten eines Unterbruchs in einer der Speiseeinheiten, d.h., wenn ein Brenner ausfällt, dies sofort durch Druckanstieg an den verbleibenden beiden Brennern wahrgenommen wird. Ohne Unterbruch des Betriebes kann die schandhafte Oellanze ausgebaut, gereinigt oder sonst instand gestellt und wieder eingesetzt werden.

## Ansprüche

1. Anlage zur Russherstellung mit einem Reaktor, in dessen Deckel (1) Speiseeinheiten (6) für die dosierte Zufuhr von Luft und Kohlenwasserstoffen vorhanden sind, wobei jede Speiseeinheit (6) einen Homogenisierraum zum Vermischen, Vergasen und Verteilen der Komponenten aufweist, dadurch gekennzeichnet, dass der als Hohlgebilde geformte Deckel (1) mit einer feuerfesten Masse (16) ausgestampft ist, in welcher Kühlorgane (13,14) Aufnahme finden.

2. Anlage nach Anspruch 1, dadurch gekennzeichnet, dass der flachen Unterseite (3) des Reaktordeckels (1) eine an einem Kühlmittelkreislauf angeschlossene Kühlschlange (13) angeordnet ist, welche um die Speiseeinheiten (6) geführte Zweigleitungen (14) aufweist.

3. Anlage nach den Ansprüchen 1 und 2, dadurch gekennzeichnet, dass die vom Kühlmittel umflossenen, mit je einem Homogenisierraum (12) und mit je einer auswechselbar angeordneten Brennereinheit versehenen Speiseeinheiten (6) um einen zentral im runden Reaktordeckel (1) angeordneten Vorbrenner (7) gleichmässig in der Umfangsrichtung verteilt sind.

4. Anlage nach den Ansprüchen 1 bis 3, dadurch gekennzeichnet, dass drei Speiseeinheiten (6) um den Vorbrenner (7) gleichmässig verteilt gruppiert sind.

5. Anlage nach den Ansprüchen 1 bis 4, dadurch gekennzeichnet, dass ein Zweig der in die flache Unterseite (3) eingebetteten Kühlschlange - (13) auch um den Vorbrenner (7) geführt ist.

FIG.1

FIG.2

Europäisches Patentamt

**EUROPÄISCHER RECHERCHENBERICHT**

Nummer der Anmeldung

EP 86 10 6687

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | US-A-3 736 102 (J.S. ROGERS, Jr., et al.) * Claim 1 * | 1 | C 09 C 1/50 F 27 D 1/12 F 27 D 9/00 F 27 D 1/18 |
| A | US-A-3 958 946 (C.R. VENABLE, Jr.) * Claim.1 * | 1 | |
| A | WO-A-8 204 306 (OUTOKUMPU OY) * Claim 1 * | 1 | |
| A | EP-A-0 085 462 (BBC AG BROWN, BOVERI & CI.) * Claim 1 * | 1 | |
| A | US-A-4 116 639 (A.E. FROSS) | | RECHERCHIERTE SACHGEBIETE (Int. Cl. 4) |
| A | US-A-3 716 340 (C.R. VENABLE, Jr.) | | C 09 C 1/00 B 01 J 19/00 F 27 D 1/00 B 01 J 3/00 F 23 M 5/00 F 27 D 9/00 |

Der vorliegende Recherchenbericht wurde für alle Patentansprüche erstellt

| Recherchenort | Abschlußdatum der Recherche | Prüfer |
|---|---|---|
| DEN HAAG | 19-09-1986 | SCHUT, R.J. |